# FASCICULE DE BREVET EUROPEEN

(11) **EP 0 928 780 B1**
(45) Date de publication et mention de la délivrance du brevet: **10.04.2002**
(21) Numéro de dépôt: 99400001.6
(22) Date de dépôt: 04.01.1999
(51) Int. Cl.: C03B 23/207, C03B 37/012

(54) **Dispositif de soudage de préformes de fibres optiques bout à bout**
Vorrichtung zum Stumpfschweissen von Vorformen für optische Fasern
Apparatus for butt-welding optical fibre preforms

(30) Priorité: 08.01.1998 FR 9800123
(43) Date de publication de la demande: 14.07.1999
(73) Titulaire: ALCATEL, 75008 Paris (FR)
(72) Inventeur: Lavanant, Gérard, 59130 Lambersart (FR); Dhenry, Philippe, 62190 Lespesses (FR); Mulon, René, 62138 Billy-Berchau (FR)
(74) Mandataire: Laroche, Danièle

(56) Documents cités:
- DE-A- 3 929 894
- GB-A- 2 081 250
- US-A- 3 113 012
- PATENT ABSTRACTS OF JAPAN vol. 7, no. 3 (C-143), 7 janvier 1983 & JP 57 160934 A (NT&T CORP), 4 octobre 1982

## Description

L'invention concerne un dispositif de soudage de préformes de fibres optiques bout à bout comprenant deux préformes montées sur un tour verrier pour être déplacées en rotation autour d'un même axe de rotation et pour être déplacées en translation parallèlement à cet axe de rotation au moins pour l'une d'entre elles, deux buses portées par deux chalumeaux oxhydriques étant disposées dans un plan perpendiculaire à l'axe de rotation et créant deux flammes entre deux extrémités des préformes se faisant face.

Dans un tel dispositif, les deux flammes sont créées par la combustion de l'oxygène et de l'hydrogène libérés sous forme de jets gazeux par les deux buses. L'énergie thermique dégagée par la combustion est fournie aux deux extrémités des préformes se faisant face pour ramollir le matériau qui les constitue et qui est en général de la silice vitreuse. La rotation des préformes qui ont une géométrie cylindrique avec par exemple une section circulaire assure une homogénéisation thermique de la périphérie des deux extrémités. Le mouvement de translation des préformes parallèlement à l'axe de rotation permet de réaliser le soudage par rapprochement et contact des deux extrémités ramollies.

Le document US 3 113 012 décrit un dispositif de ce type dans lequel les buses ont une géométrie semi-circulaire et possèdent deux rangées d'orifices d'où s'échappent les gaz nécessaires à la combustion.

On peut noter que les deux buses sont fixes et que les flammes créées par les deux rangées d'orifices sont orientées d'une manière oblique vis à vis de l'axe de rotation pour chauffer une couronne extérieure des deux extrémités des préformes qui correspond à l'épaisseur d'un tube dont elle sont constituées.

Le soudage de préformes pleines à l'aide d'un tel dispositif nécessite une durée d'exposition relativement plus longue des extrémités pour obtenir un ramollissement non plus seulement limité à une couronne extérieure mais s'étendant sur toute la surface de l'extrémité. La propagation de la chaleur par conduction de la périphérie vers le centre de la surface engendre inévitablement une propagation de la chaleur dans la direction axiale de la préforme. La largeur de la zone ainsi affectée par le chauffage est de l'ordre du diamètre de la préforme. Après le soudage, les contraintes thermiques créées lors du chauffage engendrent une hétérogénéité mécanique de la matière sur toute la largeur de la zone affectée, qui se révèle préjudiciable pour la fibre optique issue de cette zone lors du fibrage des deux préformes soudées bout à bout.

On peut également noter que la zone affectée par le chauffage est moins protégée de pollutions qui peuvent s'adsorber plus facilement avec la chaleur et engendrer une contamination de la surface latérale de la préforme sur la largeur de la zone affectée.

Le but de l'invention est de fournir un dispositif de soudage de préforme de fibres optiques qui pallie les inconvénients décrits précédemment.

A cet effet, l'invention a pour objet un dispositif de soudage de préformes de fibres optiques bout à bout comprenant
- un tour de verrier destiné à recevoir deux préformes, les déplacer en rotation autour d'un même axe de rotation et déplacer en translation parallèlement à cet axe de rotation au moins l'une d'entre elles,
- deux buses portées par deux chalumeaux oxhydriques disposées dans un plan perpendiculaire à l'axe de rotation et destinées à créer deux flammes entre deux extrémités des préformes se faisant face,
**caractérisé en ce que** l'une au moins des deux buses est montée mobile en translation perpendiculairement à l'axe de rotation de manière à faire converger les deux flammes vers l'axe de rotation et à créer deux cônes de chauffe au droit des deux extrémités des préformes.

L'invention s'étend également à un dispositif de soudage de préformes de fibres optiques bout à bout comprenant
- des moyens destinés à recevoir deux préformes disposées suivant l'axe, dit de fibrage, d'une machine de descente préforme vers un dispositif de fibrage desdites préformes,
- deux buses portées par deux chalumeaux oxhydriques disposées dans un plan perpendiculaire à l'axe de fibrage et destinées à créer deux flammes entre deux extrémités des préformes se faisant face,
**caractérisé en ce que** l'une au moins des deux buses est montée mobile en translation perpendiculairement à l'axe de fibrage de manière à faire converger les deux flammes vers l'axe de fibrage et à créer deux cônes de chauffe au droit des deux extrémités des préformes.

Dans le dispositif selon l'invention, le déplacement de l'une des deux buses en translation perpendiculairement à l'axe de rotation du tour verrier ou à l'axe de fibrage de la machine descente préforme réduit la distance entre les deux buses de telle sorte que les deux flammes qui s'échappent des buses convergent vers l'axe de rotation ou de fibrage en se recouvrant. Le recouvrement génère deux cônes de chauffe au droit de chaque extrémité des préformes. D'où il résulte que la surface de chaque extrémité est exposée dans son ensemble au cône de chauffe et est portée à plus haute température plus rapidement que par le dispositif de l'art antérieur. Cette augmentation de la vitesse de chauffage permet de réduire proportionnellement la durée d'exposition des extrémités aux flammes et par conséquent de limiter la propagation de la chaleur dans la direction axiale des préformes. La largeur affectée par le chauffage est ainsi inférieure au diamètre de la préforme, de l'ordre d'un tiers.

D'autres caractéristiques et avantages de l'invention apparaîtront à la lecture de la description de trois modes de réalisation de l'invention illustrés par les dessins.

La figure 1 est une vue de profil du dispositif selon l'invention ayant deux buses portées par deux chalumeaux .

La figure 2 est une vue en coupe transversale partielle du dispositif selon l'invention montrant deux buses auxiliaires pivotantes portées par l'un des chalumeaux.

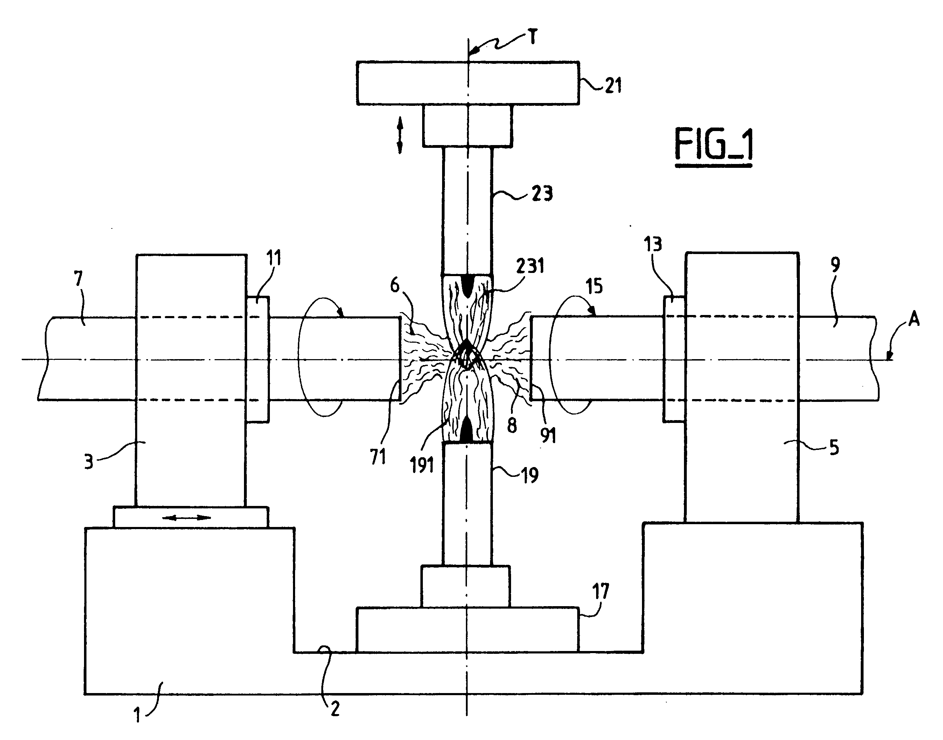

Figure 1, le dispositif selon l'invention comprend un tour verrier 1 à deux supports 3 et 5 ayant un axe commun de rotation A. Les supports portent chacun une préforme 7, respectivement 9, cylindrique à base circulaire et constituée de silice, l'un 3 au moins des deux supports étant mobile en translation parallèlement à l'axe de rotation A. Les deux préformes 7 et 9 sont maintenues dans les supports 3 et 5 par l'intermédiaire d'un mandrin 11, respectivement 13.

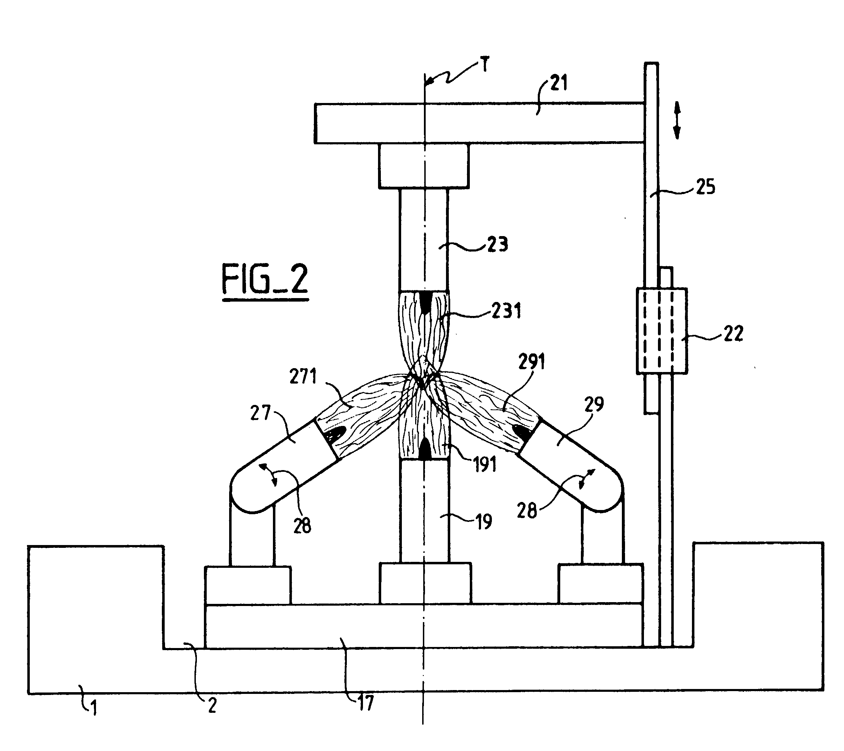

Le tour verrier 1 comprend un logement 2 dans lequel est disposé un premier chalumeau 17 portant une première buse 19. Un deuxième chalumeau 21 portant une deuxième buse 23 est disposé à l'aplomb du premier chalumeau 17 et monté sur une potence 25 montrée sur la figure 2, qui s'étend perpendiculairement au logement 2 et l'axe de rotation A.

La potence 25 comporte un mécanisme 22 par exemple à crémaillères de déplacement en translation du deuxième chalumeau 21. De préférence, les deux buses 19 et 23 sont disposées suivant un même axe T qui coïncide avec la direction de translation du deuxième chalumeau 21.

Les buses ont une géométrie tubulaires et sont constituées de silice vitreuse. Elles sont alimentées par l'intermédiaire des chalumeaux en gaz de combustion par exemple en oxygène et hydrogène. L'oxygène s'échappe par un orifice central par rapport à une section de sortie des buses et par une couronne d'orifices entourant l'orifice central. L'hydrogène s'échappe d'une tuyère enveloppant ces orifices pour permettre d'obtenir un mélange oxygène/hydrogène. De cette manière, la flamme de combustion possède une symétrie sensiblement axiale et est focalisée dans la direction de la buse tubulaire d'où elle est issue.

Lors de la mise en oeuvre du dispositif, les deux préformes sont déplacées en rotation autour de l'axe de rotation A, dans un même sens 15 et à une même vitesse. Les deux buses 19 et 23 créent deux flammes 191 et 231 entre deux extrémités 71 et 91 des préformes se faisant face sur le tour verrier 1. La buse 23 portée par le deuxième chalumeau 21 mobile en translation est déplacée parallèlement à la direction T de manière à faire converger les deux flammes 191 et 231 vers l'axe de rotation A. En se recouvrant partiellement, elles engendrent deux cônes de chauffe 6 et 8 au droit des deux extrémités 71 et 91. La chaleur de combustion de l'oxygène et de l'hydrogène est répartie par les deux cônes de chauffe sur toute la surface de chaque extrémité et engendre un ramollissement relativement uniforme de la silice vitreuse. Il en résulte une augmentation de température relativement rapide, permettant de limiter la progression de la chaleur dans la direction axiale des préformes. A la fin du ramollissement, le support 3 mobile est déplacé en translation parallèlement à l'axe de rotation A de manière à mettre en contact les deux extrémités 71 et 91 des préformes et à permettre le soudage bout à bout.

Selon un autre mode de réalisation, figure 2, le premier chalumeau 17 comprend en outre deux buses auxiliaires 27 et 29 disposées de part et d'autre de la première buse 19 dans un plan perpendiculaire à l'axe de rotation A et montées pivotantes dans ce plan. De préférence, les deux buses auxiliaires 27 et 29 et la première buse 19 sont coplanaires.

La géométrie et la constitution deux buses auxiliaires sont identiques à celles des buses portées par les chalumeaux décrites précédemment. De même, ces deux buses sont alimentées en hydrogène et en oxygène.

Les deux buses auxiliaires créent deux flammes 271 et 291 qui convergent vers l'axe de rotation. En se mélangeant aux deux flammes 191 et 231 issues des deux buses portées par les deux chalumeaux, elles apportent un supplément de chaleur de combustion disponible pour le chauffage des extrémités de préformes ayant un diamètre plus ou moins important. Par leur disposition dans un plan perpendiculaire à l'axe de rotation, les deux buses auxiliaires répartissent le supplément de chaleur sur toute la surface des extrémités, contribuant ainsi à élever plus rapidement la température des extrémités et à limiter la propagation de la chaleur dans le sens axial des préformes. Un centrage des cônes de chauffe en fonction du diamètre des préformes est obtenu par pivotement 28 des deux buses auxiliaires dans le plan perpendiculaire à l'axe de rotation. Le diamètre des cônes de chauffe est proportionnel aux débits des buses en gaz de combustion. Le dispositif selon l'invention permet ainsi de souder des préformes de différents diamètres typiquement compris entre 40 millimètres (mm) et 120 mm.

D'une façon avantageuse, les deux buses auxiliaires 27 et 29 et la première buse 19 portées par le premier chalumeau 17 ont ensemble un débit gazeux égal à celui de la deuxième buse 23 portée par le deuxième chalumeau 21. Un tel réglage des débits de gaz optimise la dépense de chaleur de combustion. A titre d'exemple, deux préformes de diamètre égal à 70 mm sont soudées bout à bout en quelques minutes, la largeur de la zone affectée par le chauffage étant limitée est à 20 mm. Il faut encore relever une absence de cordon de soudure ainsi qu'une absence de dépôt de silice de part et d'autre de la zone de soudage.

Dans un troisième mode de réalisation de l'invention, un dispositif de soudage comprend les deux préformes décrites précédemment et disposées verticalement suivant un axe de fibrage d'une machine de descente préforme connue. Les deux buses et les deux chalumeaux oxhydriques précédents sont disposés dans un plan perpendiculaire à l'axe de fibrage et créent deux flammes entre deux extrémités des préformes se faisant face. L'une au moins des deux buses est montée mobile en translation perpendiculairement à l'axe de fibrage de manière à faire converger les deux flammes vers l'axe de fibrage et à créer deux cônes de chauffe au droit des deux extrémités des préformes.

Selon ce troisième mode de réalisation de l'invention, la soudure est réalisée sans rotation des deux préformes autour de l'axe de fibrage. Une soudure en continu des préformes est prévue lorsque les chalumeaux et les buses sont intégrés à un ensemble disposé en amont de la machine de descente préforme qui permet d'aligner les préformes dans l'axe de fibrage.

Selon une variante des modes précédents de réalisation de l'invention, le premier ou le deuxième chalumeau est pourvu de deux buses d'azote disposées de part et d'autre du chalumeau pour focaliser sur les faces à souder des deux préformes, les flammes issues de la première ou de la deuxième buse à gaz de combustion. Les deux buses d'azote permettent également d'éviter un dépôt polluant de silice sur la surface latérale des préformes. A titre d'exemple, les deux buses sont disposées à 50 millimètres de part et d'autre du chalumeau et leur débit d'azote est de 20 litres par minute.

Dans le cas du troisième mode de réalisation de l'invention, les buses d'azote permettent de limiter le réchauffement de la préforme qui occupe une position supérieure par rapport à l'autre préforme, en contrecarrant un effet de cheminée des gaz issus des buses à combustion. Pour améliorer l'homogénéité de température des faces à souder, il est prévu de monter l'un des deux chalumeaux mobile autour de l'axe de fibrage et de lui imposer, dans le plan perpendiculaire à l'axe de fibrage, un mouvement de va et vient angulaire par exemple de 60 degrés avec une période de 10 secondes. Avec ce mouvement, on réalise une soudure de deux préformes de 100 millimètres de diamètre en moins de une minute.

## Revendications

1. Un dispositif de soudage de préformes de fibres optiques bout à bout comprenant :
• un tour de verrier (1) destiné à recevoir deux préformes (7, 9), les déplacer en rotation autour d'un même axe de rotation (A) et déplacer en translation parallèlement à cet axe de rotation au moins l'une d'entre elles,
• deux buses (19, 23) portées par deux chalumeaux (17, 21) oxhydriques disposées dans un plan perpendiculaire à l'axe de rotation (A) et destinées à créer deux flammes (191, 231) entre deux extrémités (71, 91) des préformes se faisant face,
**caractérisé en ce que** l'une (23) au moins des deux buses est montée mobile en translation perpendiculairement à l'axe de rotation (A) de manière à faire converger les deux flammes (191, 231) vers l'axe de rotation (A) et à créer deux cônes de chauffe (6, 8) au droit des deux extrémités (71, 91) des préformes.

2. Le dispositif selon la revendication 1, dans lequel l'un (17) des deux chalumeaux comprend en outre deux buses auxiliaires (27, 29) disposées dans un plan perpendiculaire à l'axe de rotation (A) et montées pivotantes dans ce plan de part et d'autre de la buse (19) portée par le même chalumeau (17).

3. Un dispositif de soudage de préformes de fibres optiques bout à bout comprenant :
• des moyens destinés à recevoir deux préformes disposées suivant l'axe, dit de fibrage, d'une machine de descente préforme vers un dispositif de fibrage desditse préformes,
• deux buses portées par deux chalumeaux oxhydriques disposées dans un plan perpendiculaire à l'axe de fibrage et destinées à créer deux flammes entre deux extrémités des préformes se faisant face,
**caractérisé en ce que** l'une au moins des deux buses est montée mobile en translation perpendiculairement à l'axe de fibrage de manière à faire converger les deux flammes vers l'axe de fibrage et à créer deux cônes de chauffe au droit des deux extrémités des préformes.

4. Le dispositif selon la revendication 4, dans lequel un des chalumeaux est monté mobile en rotation dans un plan perpendiculaire à l'axe de fibrage.

5. Le dispositif selon l'une des revendications 1 à 5, dans lequel des buses d'azote sont disposées de part et d'autre d'un des deux chalumeaux.

## Claims

1. Apparatus for welding together optical fiber preforms end-to-end, the apparatus comprising:
· a glass-maker's lathe (1) designed to receive two preforms (7, 9) so as to rotate them about a common axis of rotation (A), at least one of the preforms also being displaced in translation parallel to said axis of rotation; and
· two nozzles (19, 23) carried by respective ones of two oxyhydrogen blow torches (17, 21), the two nozzles being disposed in a plane perpendicular to the axis of rotation (A) and being designed to create two flames (191, 231) between two facing ends (71, 91) of the preforms, said apparatus being **characterized in that** at least one of the two nozzles (23) is mounted to move in translation perpendicularly to the axis of rotation (A) so as to cause the two flames (191, 231) to converge towards the axis of rotation (A), thereby creating two heating cones (6, 8) in alignment with the two ends (71, 91) of the preforms.

2. Apparatus according to claim 1, in which one of the two blow torches (17) is further provided with two auxiliary nozzles (27, 29) disposed in a plane perpendicular to the axis of rotation (A), and mounted to pivot in said plane on either side of the nozzle (19) carried by the same blow torch (17).

3. Apparatus for welding together optical fiber preforms end-to-end, the apparatus comprising:
· means designed to receive two preforms disposed along the fiber-drawing axis of a machine for drawing down preforms towards a device for fiber-drawing said preforms; and
· two nozzles carried by respective ones of two oxyhydrogen blow torches, the two nozzles being disposed in a plane perpendicular to the fiber-drawing axis and being designed to create two flames between the two facing ends of the preforms,
said apparatus being **characterized in that** at least one of the two nozzles is mounted to move in translation perpendicularly to the fiber-drawing axis so as to cause the two flames to converge towards the fiber-drawing axis, thereby creating two heating cones in alignment with the two ends of the preforms.

4. Apparatus according to claim 3, in which one of the blow torches is mounted to move in rotation in a plane that is perpendicular to the fiber-drawing axis.

5. Apparatus according to any one of claims 1 to 4, in which nitrogen nozzles are disposed on either side of one of the two blow torches.

## Patentansprüche

1. Vorrichtung zum Stumpfschweißen von Vorformen für optische Fasern, umfassend:
eine Glasereidrehbank (1) die dazu bestimmt ist, zwei Vorformen (7,9) aufzunehmen, diese um eine gemeinsame Rotationsachse (A) in Rotation zu versetzen und
zumindest eine von Ihnen parallel zu dieser Rotationsachse in Translation zu versetzen,
zwei Düsen (19,23) die von zwei Hydroxidschweißbrennern (17,21) getragen werden, welche in einer Ebene angeordnet sind, die rechtwinklig zur Rotationsachse (A) angeordnet ist und
die dazu bestimmt sind, zwei Flammen (191, 233) zwischen zwei Enden (73,91) der sich gegenüberliegenden Vorformen zu erzeugen,
**dadurch gekennzeichnet, dass** eine (23) der zumindest zwei Düsentranslationsbeweglich rechtwinklig zur Rotationsachse (A) montiert ist, um die zwei Flammen (191,231) gegen die Rotationsachse (A) konvergieren zu lassen und um zwei Hitzekoni (6,8) zwischen den zwei Enden (71,91) der Vorform zu schaffen.

2. Vorrichtung nach Anspruch 1, bei der einer (17) der zwei Schweißbrenner darüber hinaus zwei Zusatzdüsen (27,29) umfasst, die in einer Ebene angeordnet sind, welche rechtwinklig zur Rotatationsachse (A) liegt und schwenkbar in der Ebene beidseits der Düse (19) montiert sind, getragen von dem selben Schweißbrenner (17).

3. Vorrichtung zum Stumpfschweißen von Vorformen für optische Fasern, umfassend:
Einrichtungen, die dazu bestimmt sind, zwei Vorformen aufzunehmen, die gemäß der sogenannten Faserverlaufsachse einer Maschine für den Vorschub der Vorform in einer Einrichtung zur Auffaserung der Vorformen angeordnet sind,
zwei Düsen, die von zwei Hydroxidschweißbrennern getragen werden, angeordnet in einer Ebene rechtwinklig zur Faserverlaufsachse und dazu bestimmt, zwei Flammen zwischen zwei Enden der sich gegenüberliegenden Vorformen zu erzeugen,
**dadurch gekennzeichnet, dass** zumindest eine der zwei Düsen translationsbeweglich rechtwinklig zur Faserverlaufsachse montiert ist, um die zwei Flammen gegen die Faserverlaufsachse konvigieren zu lassen und um zwei Wärmekoni zwischen den zwei Enden der Vorformen zu erzeugen.

4. Vorrichtung nach Anspruch 3, bei der einer der Schweißbrenner rotationsbeweglich in einer Ebene rechtwinklig zur Faserverlaufsachse montiert ist.

5. Vorrichtung nach einem der Ansprüche 1 - 4, bei der die Stickstoffdüsen beidseits einer der zwei Schweißbrenner angeordnet sind.
